# EUROPEAN PATENT SPECIFICATION

(11) **EP 3 253 838 B1**
(45) Date of publication and mention of the grant of the patent: **01.04.2020**
(21) Application number: 16706093.8
(22) Date of filing: 04.02.2016
(51) Int. Cl.: C09J 123/08, C08L 91/06, C09J 5/06

(54) **HOT MELT ADHESIVE COMPOSITIONS THAT INCLUDE ETHYLENE COPOLYMER**
HEISSSCHMELZKLEBSTOFFZUSAMMENSETZUNGEN MIT ETHYLENCOPOLYMER
COMPOSITIONS ADHÉSIVES THERMOFUSIBLES COMPRENANT UN COPOLYMÈRE D'ÉTHYLÈNE

(30) Priority: 06.02.2015 US 201562113122 P
(43) Date of publication of application: 13.12.2017
(73) Proprietor: H. B. Fuller Company, St. Paul, Minnesota 55164-0683 (US)
(72) Inventor: KAUFFMAN, Thomas F., Woodbury, MN 55125 (US); SCHMIDT, Scott C., Woodbury, MN 55129 (US)
(74) Representative: Maiwald Patent- und Rechtsanwaltsgesellschaft mbH
(86) International application number: PCT/US2016/016577
(87) International publication number: WO 2016/126949

(56) References cited:
- EP-A2- 0 358 351
- WO-A1-2011/129926

## Description

### BACKGROUND

The invention is directed to hot melt adhesive compositions that include one or more ethylene copolymers, no greater than about 27 % by weight of a tackifying agent and a wax.

Hot melt adhesive compositions are solid at room temperature and melt at higher temperatures. Hot melt adhesive compositions can be used in packaging applications e.g. to close box tops and also to form cases, cartons and/or trays. Hot melt adhesives used in packaging should exhibit good bond formation across a broad temperature range, heat resistance, and a fast set time to be commercially useful.

Hot melt adhesive compositions for packaging are made from a variety of different base polymers including ethylene based copolymers (e.g.ethylene vinyl acetate). Hot melt adhesive compositions for packaging can include tackifying agent and wax as well (see e.g. WO2011/129926A1). The tackifying agent used with ethylene vinyl acetate type polymers is often a polar tackifying agent such as e.g. rosin or functionalized terpene based resin. In some applications, it can be desirable to use a hydrogenated hydrocarbon based tackifying agent to lower the color of the hot melt adhesive. At times, it would further be useful to be able to limit the tackifying agent in the hot melt adhesive composition.

### SUMMARY

In one aspect, the invention features a hot melt adhesive composition including from 40 % to 85 % by weight of an ethylene copolymer derived from ethylene and a co-monomer selected from the group consisting of vinyl acetate, alkyl acrylate, alkyl methacrylate, and combinations thereof, no greater than 27 % by weight of a tackifying agent, and from 15 % to 35 % by weight of a synthetic wax; wherein the ethylene copolymer has a melt index (190 °C, 2.16 kgs) of at least 450 g/10 min and a comonomer content of no greater than 27 % by weight, said hot melt adhesive composition having a viscosity at 177 °C of no greater than 2Pas (2000 cps).

In one embodiment, the ethylene copolymer is derived from ethylene and vinyl acetate.
In another embodiment, the ethylene copolymer has a comonomer content of no greater than 20 % by weight. In a different embodiment, the ethylene copolymer has a melt index (190 °C, 2.16 kgs) of at least 1000 g/10 min.

In one embodiment, the tackifying agent is a hydrogenated hydrocarbon resin with a melt point of at least 110 °C. In another embodiment, the tackifying agent is a hydrogenated hydrocarbon resin with an aromatic content of no greater than 15 % by weight. In a different embodiment, the sum of the ethylene copolymer, the tackifying agent and the synthetic wax comprises at least 90 % by weight of the composition.

In one embodiment, the hot melt adhesive composition is free of a functionlized wax. In another embodiment, the hot melt adhesive composition further comprises a styrene block copolymer. In a different embodiment, the hot melt adhesive composition has a viscosity at 149 °C of no greater than 1500 cps.

In still another embodiment, the hot melt adhesive composition has a MEC set speed of no greater than 2 seconds and a heat stress resistance of no less than 51.7 °C. In a different embodiment, the hot melt adhesive composition has a viscosity change of no greater than 12 % after 2-weeks, when tested according to the Thermal Stability Test Method.

In a different aspect, a hot melt adhesive composition is described including from 35 % by weight to 65 % by weight of an ethylene copolymer derived from ethylene and a co-monomer selected from the group consisting of vinyl acetate, alkyl acrylate, alkyl methacrylate, and combinations thereof, no greater than 27 % by weight of a tackifying agent, and at least 15 % of a wax; wherein the ethylene copolymer has a MI of at least 1000 (190 °C, 2.16 kgs) and a comonomer content of no greater than 18 % by weight.

In one aspect, the hot melt adhesive composition further comprises a single-site catalyzed polyethylene copolymer. In a different embodiment, the ethylene copolymer comprises an ethylene vinyl acetate copolymer and an ethylene n-butyl acrylate copolymer.

In one aspect, the ethylene copolymer has a MI of at least 1400 (190 °C, 2.16 kgs). In a different embodiment, the hot melt adhesive composition has a viscosity at 149 °C of no greater than 1.5 Pas (1500 cps).

In one aspect, the invention features a package including the hot melt adhesive composition, a first substrate comprising fibers; and a second substrate comprising fibers, the second substrate bonded to the first substrate through the hot melt adhesive composition.

In one embodiment, the package is selected from a carton, case or tray. In a different embodiment, the hot melt adhesive composition is applied to the first or second substrate at an application temperature of less than 163°C.

The invention features a hot melt adhesive composition that includes an ethylene copolymer, a limited amount of tackifying agent and a wax. The hot melt adhesive compositions maintain exceptional color and viscosity stability after heat aging for several weeks at 177°C, good bonding over a broad temperature range, high heat resistance and a fast speed of set.

Other features and advantages will be apparent from the following description of the preferred embodiments and from the claims.

### DETAILED DESCRIPTION

### HOT MELT ADHESIVE COMPOSITION

The hot melt adhesive composition includes from about 35 % to about 85 % by weight of one or more ethylene copolymers derived from ethylene and a co-monomer selected from the group consisting of vinyl acetate, alkyl acrylate, alkyl methacrylate, and combinations thereof, no greater than 27 % by weight of a tackifying agent and a wax.

The hot melt adhesive composition exhibits a fast set time. The hot melt adhesive can have a set time of no greater than 3 seconds, no greater than 2 seconds, or even no greater than 1.5 seconds. The hot melt adhesive composition also exhibits a fiber tearing bond to fibrous packaging materials at both low and high temperatures. The hot melt adhesive composition can exhibit a fiber tear of greater than 25 %, greater than 30 %, greater than 40 %, greater than 45 %, greater than 50 %, or even greater than 70 % fiber tear at 4 °C, -18 °C, or even at -29 °C, and greater than 25 %, greater than 30 %, greater than 40 %, greater than 45 %, greater than 50 %, or even greater than 70 % fiber tear at 60 °C.

The hot melt adhesive composition also exhibits good heat stress resistance, preferably a heat stress resistance of at least 50 °C, at least 54 °C, at least 60 °C, or even at least 63 °C.

The hot melt adhesive composition preferably exhibits a viscosity of no greater than 5000 mPas (cP), no greater than 3000 mPas (cP), no greater than 2000 mPas (cP), no greater than 1500 mPas (cP), no greater than 1200 mPas (cP), or even no greater than 1000 mPas (cP) at 177 °C. The hot melt adhesive composition can be formulated to exhibit a viscosity of no greater than 2000 mPas (cP), no greater than 1500 mPas (cP), no greater than 1300 mPas (cP), or even no greater than 1200 mPas (cP) at 149 °C, or even at 135 °C.

The hot melt adhesive has good thermal stability. In one embodiment, the hot melt adhesive has a viscosity change of no greater than 15 %, no greater than 12 %, or even no greater than 10 % after aging for two weeks according to the Thermal Stability Test Method.

The hot melt adhesive can be free of a functionalized wax

### ETHYLENE COPOLYMER

The hot melt adhesive composition includes an ethylene copolymer. The ethylene copolymer can comprise one or more ethylene copolymers.

The ethylene copolymer is derived from ethylene and a co-monomer that includes vinyl unsaturation examples of which include vinyl acetate, alkyl acrylate, alkyl methacrylate, and combinations thereof. Useful ethylene copolymers include, e.g., ethylene vinyl acetate, ethylene acrylate, ethylene methacrylate, ethylene methyl methacrylate, ethylene n-butylacrylate, ethylene 2-ethyl hexyl acrylate, ethylene octyl acrylate and combinations thereof.

The ethylene copolymer has a melt index of at least 450 g/10 min, at least 500 g/10 min, at least 1000 g/10 min, at least 1200 g/10 min, at least 1400 g/10 min, at least 2000 g/10 min, from 450 g/10 min to 3000 g/10 min, or even from 500 g/10 min to 2500 g/10 min at 190 °C when tested according to ASTM D 1238-04C using a 2.16 kg weight.

The ethylene copolymer preferably has an acid number of no greater than 3 milligrams (mg) potassium hydroxide (KOH) per gram (g) of ethylene copolymer, no greater than 2 mg KOH/g, or even no greater than 1 mg KOH/g, as determined according to ASTM D-1994-07.

The ethylene copolymer has a comonomer content of no greater than 27 % by weight, no greater than 26 %, no greater than 22 % by weight, no greater than 20 % by weight, no greater than 18 % by weight, from 10 % by weight to 27 % by weight, or even from 14 % by weight to 20 % by weight.

Useful ethylene copolymers are available under a variety of trade designations including, e.g., ESCORENE MV 02514 (14-2500), ESCORENE MV 02528 (28-2500), ECORENE UL 7510 (18-500) and ESCORENE UL 8705 (28-800) - all ethylene vinyl acetate copolymers and ENBA EN 33900 (33-900), ethylene n-butyl acrylate copolymer available from ExxonMobil Chemical Company (Houston, Texas), ATEVA 1880A (18-500) ethylene vinyl acetate copolymer available from Celanese (Irving, Texas) and ALCUDIA PA-407 (14->1500) ethylene vinyl acetate copolymer available from Repsol (Madrid, Spain). The values in parenthesis after the product name are (Comonomer weight % - melt index (190°C, 2.16 kgs)).

If more than one ethylene copolymer is present in the composition, the melt index and comonomer content are a weight average of the grades present. As an example, if the composition contained 25% EVA (14-2500) and 25% EVA (18-500), the melt index would be equal to 1500 i.e. (25/50 ^{∗}(2500) + 25/50 ^{∗} (500)).

The hot melt adhesive composition includes at least 35% by weight, at least 40% by weight, at least 45 % by weight, at least 50 % by weight, at least 55 % by weight, from 35 % by weight to 65% by weight, from 40 % by weight to 85 % by weight, from 45 % by weight to 85 %, from 50 % by weight to 80 %, by weight, from 45 % by weight to 65 % by weight, or even from 45 % by weight to 55 % by weight of the ethylene copolymer.

### TACKIFYING AGENT

The hot melt adhesive composition includes a tackifying agent. Suitable classes of tackifying agents include, e.g., aromatic, aliphatic and cycloaliphatic hydrocarbon resins, mixed aromatic and aliphatic modified hydrocarbon resins, aromatic modified aliphatic hydrocarbon resins, and hydrogenated versions thereof; terpenes, modified terpenes and hydrogenated versions thereof; natural rosins, modified rosins, rosin esters, and hydrogenated versions thereof; low molecular weight polylactic acid; and combinations thereof. Examples of useful natural and modified rosins include gum rosin, wood rosin, tall oil rosin, distilled rosin, hydrogenated rosin, dimerized rosin, and polymerized rosin. Examples of useful rosin esters include e.g., glycerol esters of pale wood rosin, glycerol esters of hydrogenated rosin, glycerol esters of polymerized rosin, pentaerythritol esters of natural and modified rosins including pentaerythritol esters of pale wood rosin, pentaerythritol esters of hydrogenated rosin, pentaerythritol esters of tall oil rosin, phenolic-modified pentaerythritol esters of rosin, and combinations thereof. Examples of useful polyterpene resins include polyterpene resins having a softening point, as determined by ASTM method E28-58T, of from 10 °C to 160 °C, hydrogenated polyterpene resins, and copolymers and terpolymers of natural terpenes (e.g. styrene-terpene, alpha-methyl styrene-terpene and vinyl toluene-terpene), and combinations thereof. Examples of useful aliphatic and cycloaliphatic petroleum hydrocarbon resins include aliphatic and cycloaliphatic petroleum hydrocarbon resins having Ring and Ball softening points of from 10 °C to 160 °C, the hydrogenated derivatives thereof, and combinations thereof. Suitable aliphatic and cycloaliphatic petroleum hydrocarbon resins include, e.g., branched, unbranched, and cyclic C5 resins, C9 resins, and C10 resins.

The tackifying agent can be a hydrocarbon resin. It can further be a hydrogenated hydrocarbon resin. In one embodiment, the hydrogenated hydrocarbon resin has an aromatic content of less than 15% by weight, or even less than 10% by weight.

The tackifying agent can have a softening point of at least 100 °C, at least 110 °C, at least 120 °C, or even at least 125 °C.

Useful tackifying agents are commercially available under a variety of trade designations including, e.g., the ESCOREZ series of trade designations from ExxonMobil Chemical Company (Houston, Texas) including, e.g., ESCOREZ 5400, ESCOREZ 5415, ESCOREZ 5600, ESCOREZ 5615, ESCOREZ 5637, and ESCOREZ 5690, the EASTOTAC series of trade designations from Eastman Chemical Company (Kingsport, Tennessee) including, e.g., EASTOTAC H-100R, EASTOTAC H-100L, EASTOTAC H130W, and EASTOTAC H142, the WINGTACK series of trade designations from Cray Valley HSC (Exton, Pennsylvania) including, e.g., WINGTACK 86, WINGTACK EXTRA, and WINGTACK 95, the PICCOTAC series of trade designations from Eastman Chemical Company (Kingsport, Tennessee) including, e.g., PICCOTAC 8095, the ARKON series of trade designations from Arkawa Europe GmbH (Germany) including, e.g., ARKON P-125, and the REGALITE series of trade designations from Eastman Chemical Company including, e.g., REGALITE R1125.

The hot melt adhesive composition includes no greater than 27% by weight of a tackifying agent, no greater than 25% by weight of a tackifying agent, from 5 % by weight to 27 % by weight, at least 10 % by weight, at least 15% by weight, from 10 % by weight to 27% by weight, from 15 % by weight to 25 % by weight, or even from 20 % by weight to 25 % by weight tackifying agent.

### WAX

The hot melt adhesive composition includes a wax. Classes of useful waxes include, e.g., functionalized waxes (waxes that include a polar functional group), non-functionalized waxes (i.e., waxes that do not include a polar functional group), and mixtures thereof.

Useful functionalized waxes include, e.g., functionalized polyethylene wax (e.g., maleated polyethylene wax and oxidized polyethylene wax), functionalized polypropylene wax (e.g., maleated polypropylene wax and oxidized polypropylene wax), polar waxes, functionalized stearamide waxes (e.g., hydroxystearamide, N-(2-hydroxy ethyl)-12-hydroxystearamide, N,N'-ethylene bis 12-hydroxystearamide, and 12-hydroxy stearic acid N,N'ethylene-bis stearamide), and combinations thereof.

Useful non-functionalized waxes include, e.g., synthenic waxes (e.g. Fischer Tropsch waxes and polyolefin waxes (e.g., polypropylene waxes and polyethylene waxes)), stearamide waxes, benzoate ester waxes, animal waxes, vegetable waxes, paraffin waxes, microcrystalline waxes, metallocene waxes, glycerin monostearate, sorbitan monostearate, and combinations thereof.

The wax can be a synthetic wax selected from the group consisting of polypropylene waxes, polyethylene waxes and Fischer-Tropsch waxes.

Useful synthetic polypropylene waxes are commercially available under a variety of trade designations including, e.g., HONEYWELL AC1089 from Honeywell Int'l Inc. and LICOCENE 6102 from Clariant Int'l Ltd. (Muttenz, Switzerland).

Useful synthetic polyethylene waxes are commercially available under a variety of trade designations including, e.g., the POLYWAX series of trade designations including POLYWAX 3000 from Baker Hughes (Houston, Texas), CWP 400 from SSI CHUSEI, Inc. (Pasedena, Texas), the EPOLENE series of trade designations from Westlake Chemical Corporation (Houston, Texas) including, e.g., EPOLENE N-21 and N-14 polyethylene waxes, the BARECO series of trade designations from Baker Hughes Inc. (Sugar Land, Texas) including, e.g., BARECO C4040 polyethylene wax, and the AC series of trade designations from Honeywell Int'l Inc. (Morristown, New Jersey) including, e.g., A-C 8 and A-C 9 polyethylene waxes.

Useful synthetic Fischer Tropsch waxes are commercially available under a variety of trade designations including, e.g., the BARECO series of trade designations from Baker Hughes Inc. (Sugar Land, Texas) including, e.g., BARECO PX-100 and PX-105 Fischer Tropsch waxes, the SHELLWAX series of trade designations from Shell Malaysia Ltd. (Kuala Lumpur, Malaysia) including, e.g., SHELLWAX SX100 and SX105 Fischer Tropsch waxes, the VESTOWAX series of trade designations from Evonik Industries AG (Germany) including, e.g., VESTOWAX 2050 Fischer Tropsch wax, and the SASOLWAX series of trade designations from Sasol Wax North America Corporation (Hayward, California) including, e.g., SASOLWAX H105, C80, H1, and H4 Fischer Tropsch waxes.

In one embodiment, the wax is a blend of a synthetic wax and a paraffin wax.

The hot melt adhesive composition includes at least 10 % by weight, at least 15% by weight, at least 20% by weight, from 10 % by weight to 40 % by weight, from 15 % by weight to 35 % by weight, or even from 20 % by weight to 30 % by weight of a wax.

### ADDITIVES

The hot melt adhesive composition optionally includes a variety of additional components including, e.g., functionalized waxes, antioxidants, stabilizers, additional polymers, adhesion promoters, ultraviolet light stabilizers, rheology modifiers, corrosion inhibitors, colorants (e.g., pigments and dyes), fillers, flame retardants, nucleating agents, and combinations thereof.

Useful antioxidants include, e.g., pentaerythritol tetrakis[3,(3,5-di-tert-butyl-4-hydroxyphenyl)propionate], 2,2'-methylene bis(4-methyl-6-tert-butylphenol), phosphites including, e.g., tris-(p-nonylphenyl)-phosphite (TNPP) and bis(2,4-di-tert-butylphenyl)4,4'-diphenylene-diphosphonite, di-stearyl-3,3'-thiodipropionate (DSTDP), and combinations thereof. Useful antioxidants are commercially available under a variety of trade designations including, e.g., the IRGANOX series of trade designations including, e.g., IRGANOX 1010, IRGANOX 565, and IRGANOX 1076 hindered phenolic antioxidants, and IRGAFOS 168 phosphite antioxidant, all of which are available from BASF Corporation (Florham Park, New Jersey), and ETHYL 702 4,4'-methylene bis(2,6-di-tert-butylphenol) (Albemarle Corporation, Baton Rouge, Louisiana). When present, the adhesive composition preferably includes from 0.1 % by weight to 2 % by weight antioxidant.

Useful additional polymers include, e.g., homopolymers, copolymers, and terpolymers including, e.g., polyolefins (e.g., polyethylene, polypropylene, single site catalyzed polyolefins (e.g. metallocene-catalyzed polyolefins), and combinations thereof), elastomers including, e.g., elastomeric block copolymers (e.g., styrene-butadiene-styrene, styreneisoprene-styrene, styrene-ethylene/butene-styrene, styrene-ethylene/propylene-styrene, metallocene-based elastomeric block copolymers, and combinations thereof), and functionalized versions thereof, and combinations thereof. Examples of suitable commercially available polymers include, e.g., EPOLENE C-15 branched polyethylene, and EPOLENE C-10 branched polyethylene, which are available from Westlake Chemical Corporation (Houston, Texas), AFFINITY 1900 and 1950 ethylene-octene copolymers, which are available from Dow Chemical Co. (Midland, Michigan), VECTOR 4211 styrene-isoprene-styrene block copolymer available from TSRC / DEXCO (Houston, Texas) and KRATON G1643 M and G1657 M styrene-ethylene/butene-styrene block copolymers available from Kraton Polymers US LLC (Houston, Texas). The additional polymer is present at no greater than 30 % by weight, no greater than about 10 % by weight, no greater than about 5 % by weight, or even at from 2 % by weight to 30 % by weight.

Useful nucleating agents include, e.g., polymeric nucleating agents, minerals, amides, aromatic organic compounds, phosphate ester salts, organic salts and combinations thereof. Examples of suitable nucleating agents include polypropylene, polypropylene wax, polyethylene, polyethylene wax, polystyrene, poly(cyclohexylethylene), stearamides, anthraquinones, fatty acid amides, adipic acid, benzoic acid, benzoic acid salts, phosphate ester salts, sorbitols, kaolin, talc and combinations thereof. The nucleating agent preferably increases the set speed of the adhesive composition.

### USES

The hot melt adhesive composition can be applied to or incorporated in a variety of articles including, e.g., films (e.g., polyolefin films (e.g., polyethylene and polypropylene), polyester film, metalized polymer film, multi-layer film, and combinations thereof), fibers, substrates made from fibers (e.g., virgin fibers, recycled fibers, synthetic polymer fibers (e.g., nylon, rayon, polyesters, acrylics, polypropylenes, polyethylene, polyvinyl chloride, polyurethane), cellulose fibers (e.g., natural cellulose fibers such as wood pulp), natural fibers (e.g., cotton, silk and wool), and glass fibers, and combinations thereof), release liners, porous substrates, cellulose substrates, sheets (e.g., paper, and fiber sheets), paper products, woven and nonwoven webs (e.g., webs made from fibers (e.g., yarn, thread, filaments, microfibers, blown fibers, and spun fibers) perforated films, and combinations thereof), tape backings, and combinations thereof.

The hot melt adhesive composition is useful for bonding a variety of substrates including, e.g., cardboard, coated cardboard, paperboard, fiber board, virgin and recycled kraft, high and low density kraft, chipboard, treated and coated kraft and chipboard, and corrugated versions of the same, clay coated chipboard carton stock, composites, leather, polymer (e.g., polyolefin (e.g., polyethylene and polypropylene), polyvinylidene chloride films, ethylene vinyl acetate, polyester, styrene, and polyamide), polymer film (e.g., polyolefin films (e.g., polyethylene and polypropylene), polyvinylidene chloride films, ethylene vinyl acetate films, polyester films, metalized polymer film, multi-layer film, and combinations thereof), fibers and substrates made from fibers (e.g., virgin fibers, recycled fibers, synthetic polymer fibers, cellulose fibers, and combinations thereof), release liners, porous substrates (e.g., woven webs, nonwoven webs, and perforated films), cellulose substrates, sheets (e.g., paper, and fiber sheets), paper products, tape backings, and combinations thereof. Useful composites include, e.g., chipboard laminated to metal foil (e.g., aluminum foil), which optionally can be laminated to at least one layer of polymer film, chipboard bonded to film, Kraft bonded to film (e.g., polyethylene film), and combinations thereof.

The hot melt adhesive composition is useful for bonding a first substrate to a second substrate in a variety of applications and constructions including, e.g., packaging, bags, boxes, cartons, cases, trays, multi-wall bags, articles that include attachments (e.g., straws attached to drink boxes), ream wrap, cigarettes (e.g., plug wrap), filters (e.g., pleated filters and filter frames) and bookbinding.

The hot melt adhesive composition can be applied to a substrate in any useful form including, e.g., as fibers, as a coating (e.g., a continuous coatings and discontinuous coatings (e.g., random, pattern, and array)), as a bead, as a film (e.g., a continuous films and discontinuous films), and combinations thereof, using any suitable application method including, e.g., slot coating, spray coating (e.g., spiral spray, random spraying, and random fiberization (e.g., melt blowing)), foaming, extrusion (e.g., applying a bead, fine line extrusion, single screw extrusion, and twin screw extrusion), wheel application, noncontact coating, contacting coating, gravure, engraved roller, roll coating, transfer coating, screen printing, flexographic, "on demand" application methods, and combinations thereof.

The hot melt adhesive composition can be applied at an application temperature of no greater than 190 °C, no greater than 177 °C, no greater than 163 °C, from 121 °C to 177 °C, or even from 135 °C to 163 °C.

In on demand hot melt application systems (which are also referred to as "tank free" and "tankless" systems), hot melt compositions are fed in a solid state (e.g., pellets), to a relatively small heating vessel (relative to traditional hot melt applications systems that include a pot) where the hot melt composition is melted and, typically shortly thereafter, the molten liquid is applied to a substrate. In on demand systems, a relatively large quantity of hot melt composition typically does not remain in a molten state for an extended period of time. In many existing on demand systems, the volume of molten hot melt composition is no greater than 1 liter, or even no greater than 500 milliliters, and the hot melt composition is maintained in a molten state for a relatively brief period of time, including, e.g., less than two hours, less than one hour, or even less than 30 minutes. Suitable on demand hot melt adhesive application systems include, e.g., InvisiPac Tank-Free Hot Melt Delivery System from Graco Minnesota Inc. (Minneapolis, Minnesota) and the Freedom Hot Melt Dispensing System from Nordson Corporation (Westlake, Ohio). On demand hot melt adhesive application systems are described in U.S. Patent Publication Nos. 2013-0105039, 2013-0112709, 2013-0112279, and 2014-0042182, and U.S. Patent No. 8,201,717.

The invention will now be described by way of the following examples. All parts, ratios, percentages, and amounts stated in the Examples are by weight unless otherwise specified.

### EXAMPLES

### Test Procedures

Test procedures used in the examples include the following. The procedures are conducted at room temperature (i.e., an ambient temperature of from 20 °C to 25 °C) unless otherwise specified.

### Viscosity Test Method

Viscosity is determined in accordance with ASTM D-3236 entitled, "Standard Test Method for Apparent viscosity of Hot Melt Adhesives and Coating Materials," (October 31, 1988), using a Brookfield viscometer, a Brookfield Thermosel heated sample chamber, and a number 27 spindle. The results are reported in centipoise (cps).

### Fiber Tear Test Method

The percentage fiber tear is the percentage of fiber that covers the area of the adhesive after two substrates, which have been previously bonded together through the adhesive, are separated by force. The percentage of fiber tear exhibited by an adhesive composition is determined as follows. A bead of the adhesive composition measuring 15.24 cm (6 inch) x 0.24 cm (3/32 inch) is applied to a first substrate of ROCKTENN 44 pound 87 % virgin liner board, using a ROCKTENN bond simulator at the specified application temperature. Two seconds after the bead of adhesive is applied to the first substrate, the bead of adhesive is contacted with a second substrate of ROCKTENN 44 pound 87 % virgin liner board, which is pressed against the adhesive and the first substrate with a pressure of 0.21 MPa (30 pounds per square inch (psi)) for a period of 2 seconds. The resulting constructions are then conditioned at room temperature for at least 4 hours and then conditioned at the specified test temperature for at least 12 hours. The substrates of the construction are then separated from one another at the conditioning temperature (e.g., immediately after removing the sample from the conditioning chamber) by pulling the two substrates apart from one another by hand. The surface of the adhesive composition is observed and the percent of the surface area of the adhesive composition that is covered by fibers is determined and recorded. A minimum of five samples are prepared and tested for each hot melt adhesive composition. The results are reported in units of % fiber tear.

### Set Time Test Method

A bead of adhesive composition measuring 15.24 cm (6 inch) x 0.24 cm (3/32 inch) is applied to a first substrate of ROCKTENN 44 pound 87 % virgin liner board, using a ROCKTENN bond simulator at the specified application temperature. A timer is started as the bead is applied to the first substrate. 0.4 seconds after the bead of adhesive is applied to the first substrate, the bead of adhesive is contacted with a second substrate of ROCKTENN 44 pound 87 % virgin liner board, which is pressed against the adhesive and the first substrate with a pressure of 0.21 MPa (30 pounds per square inch (psi)) for a period of 0.4 seconds. When the timer is at 3 seconds, the now formed bond is pulled apart. If the bond results in less than 100 % fiber failure, another bond is made and pulled after 3.5 seconds. In this manner, the amount of time that is allowed to elapse prior to pulling the bond is increased in 0.5 second increments until the set time is arrived upon. The set time is the shortest amount of time in which a pulled bond results in 100 % fiber failure. Once a set time is achieved, the test is repeated one more time to confirm the result. If the bond gives 100 % fiber failure at 3 seconds, the set time is recorded as no greater than 3 seconds. The results are reported in seconds (s).

### MEC Set Speed

A bead of adhesive composition measuring 5.08 cm by 0.24 cm is applied to a first substrate of RockTenn 56SK-23ME-56SK high performance 44 pound ECT 87 % virgin liner board using a MEC ASM-15N Hot Melt Bond Simulator at 177 °C. Two seconds after the bead of adhesive is applied to the first substrate, the bead of adhesive is contacted with the second substrate of RockTenn 56SK-23ME-56SK high performance 44 pound ECT 87 % virgin liner board, which is then pressed against the first substrate with a pressure of 0.21 MPa and for a period of time (referred to herein as the compression time). The Bond Simulator timer is started when the substrates are compressed. After a pre-programmed compression time the instrument separates the two substrates by pulling on the second substrate in the Z direction and holding the first substrate in a fixed position and the force required to separate the substrates and the amount of fiber tear present on the adhesive composition is measured. Samples are run in triplicate at each compression time. Initially, the compression time is 0.5 seconds. If the three samples fail to exhibit greater than 50 % Fiber Tear for each sample, the compression time is increased by 0.1 second and the test method is repeated until greater than 50 % fiber tear is noted for all three samples. The set time is recorded as the compression time at which the three samples achieve greater than 50 % fiber tear immediately upon separation. The set speed is recorded in seconds.

### Heat Stress Resistance Test Method

Heat stress resistance is measured according to standard number IOPP T-3006 entitled, "Suggested Test Method for Determining the Heat Stress Resistance of Hot Melt Adhesives," using a starting temperature of 46 °C (115 °F) and five bonded samples per adhesive. After 24 hours, the number of samples that are no longer supporting the weight is recorded, and the temperature is increased. The pass temperature for each adhesive, which is defined as the maximum temperature at which 80 % of the samples remain bonded, is the heat stress resistance and is reported in degrees Celsius (°C).

### Thermal Stability Test Method

A 200 gram sample of hot melt adhesive composition is placed in a 400-ml pyrex beaker and conditioned in a temperature controlled oven at 177 °C for a set number of hours. The molten sample is removed from the oven. The molten sample is observed for the presence of gel, surface skin formation, and charring. The observations are recorded.

The sample is then tested according to the Viscosity test method and the measured viscosity is reported in centipoise.

Thermal stability is determined by change in viscosity and the presence or absence of charring or skinning.

### Molten Gardner Color (MGC)

A sample is conditioned according to the thermal conditioning procedure set forth in ASTM D-1544 and then tested (in the molten state) to determine Gardner color by comparing the color of the sample against the Gardner Color Standards set forth in ASTM D-1544. The comparison is made using a Gardner Delta Comparator equipped with an Illuminator available from Pacific Scientific (Bethesda, Maryland). The result is reported as the number corresponding to the Gardner Color Standard.

### Examples

The example compositions were made in 300 gram batches. All the raw materials were placed into a pint size aluminum can. The can was placed in a 177 °C oven for 2-3 hours until all the raw materials were molten. The can was then placed in a heating mantle and mixed with an upright mixer for 30 minutes at 177 °C until homogeneous.

**Table One**

| | Ex 1 | Ex 2 | Ex 3 | Control 1 | Ex 4 | Ex 5 |
|---|---|---|---|---|---|---|
| EVA (14-2500) | 59.8 | 59.8 | 59.8 | | | |
| EVA (18-500) | | | | | 10 | 17.8 |
| EVA (28-800) | | | | 54.8 | 44.8 | 37 |
| RESINALL H-1030 | | | 15 | 15 | 20 | 20 |
| ESCOREZ 5615 | 20 | 17 | | | | |
| EPOLENE N-21 | | | 5 | | | |
| SHELL WAX SX 105 | 20 | 20 | 20 | 30 | 25 | 25 |
| EPOLENE E-43 | | 3 | | | | |
| IRGANOX 1010 | 0.2 | 0.2 | 0.2 | 0.2 | 0.2 | 0.2 |
| Comonomer content of ethylene copolymer (wt %) | 14 | 14 | 14 | 28 | 26.2 | 24.7 |
| Viscosity @ 177 °C (350 °F) (cps) | 1037 | 998 | 998 | 1250 | 1312 | 866 |
| MEC Set Speed (seconds) | 1.5 | 1.1 | 1.8 | >2.2 | 1.6 | 1.0 |
| Heat Stress Resistance °C (°F) | 60 | 54.4 | 51.7 | 48.9 | 51.7 | 57.2 |
| | (140) | (130) | (125) | (120) | (125) | (135) |
| Fiber Tear @ -29 °C (-20 °F) (%) | 90 | 95 | 68 | 87 | 86 | 64 |
| Fiber Tear @ -18 °C (0 °F) (%) | 95 | 97 | 77 | 84 | 90 | 69 |
| Fiber Tear @ 4.4 °C (40 °F) (%) | 100 | 100 | 95 | 86 | 92 | 93 |
| Fiber Tear @ RT (%) | 100 | 100 | 96 | 95 | 91 | 96 |
| Fiber Tear @ 54.4 °C(130 °F)(%) | NT (Not Tested) | NT | 86 | 78 | 63 | 90 |
| Fiber Tear @ 60 °C(140 °F)(%) | 85 | 80 | 45 | 90 | 80 | 86 |

**Table Two**

| | Ex 6 | Ex 7 | Ex 8 | Ex 9 | Ex 10 | Ex 11 | Ex 12 |
|---|---|---|---|---|---|---|---|
| EVA (18-500) | 50 | 45 | 45 | 47.5 | 49.8 | 50 | 45 |
| RESINALL H-1030 | 19.5 | 19.5 | 19.5 | 19.5 | 10 | | |
| PICCOTAC 115 | | | | | 10 | 19.5 | |
| ESCOREZ 5637 | | | | | | | 19.5 |
| EPOLENE N-21 | | | 15 | | | | 15 |
| SHELL WAX SX 105 | 30 | 35 | 20 | 32.5 | 30 | 30 | 20 |
| IRGANOX 1010 | 0.5 | 0.5 | 0.5 | 0.5 | 0.2 | 0.5 | 0.5 |
| Comonomer content of ethylene copolymer (wt %) | 18 | 18 | 18 | 18 | 18 | 18 | 18 |
| Viscosity @ 177 °C (350 °F) (cps) | 1539 | 1041 | 1450 | 1262 | 1476 | 1439 | 1478 |
| MEC Set Speed (seconds) | 1.3 | 1.1 | 1.2 | 1.3 | 1.2 | 1.1 | 1.1 |
| Heat Stress Resistance °C (°F) | 62.8 | 65.6 | 65.6 | 62.8 | 62.8 | 57.2 | NT |
| | (145) | (150) | (150) | (145) | (145) | (135) | |
| Fiber Tear @ -29 °C(-20 °F)(%) | 72 | 49 | 93 | 62 | 91 | 85 | 74 |
| Fiber Tear @ 17.8 °C(0 °F)(%) | 93 | 86 | 73 | 56 | 79 | 50 | 50 |
| Fiber Tear @ 4.4 °C(40 °F)(%) | 93 | 81 | 95 | 95 | 92 | 63 | 82 |
| Fiber Tear @ RT (%) | 97 | 89 | 94 | 93 | 96 | 93 | 94 |
| Fiber Tear @ 54.4 °C(130 °F)(%) | 96 | 94 | 95 | 96 | 98 | 89 | 56 |
| Fiber Tear @ 60 °C(140 °F)(%) | 96 | 99 | 100 | 96 | 99 | 98 | 88 |

**Table Three**

| | Ex 13 | Ex. 14 | Ex 15 | Ex 16 | Ex 17 | Ex 18 | Ex 19 |
|---|---|---|---|---|---|---|---|
| EVA (15- > 1500) | | 50 | | | | 60 | 55 |
| EVA (14-2500) | 50 | | 59.8 | 54.8 | | | |
| EVA (18-500) | | | | | 50 | | |
| RESINALL H-1030 | 19.5 | 17.5 | 20 | 20 | 14.5 | 19.5 | 19.5 |
| SHELLWAX SX 105 | 30 | 32 | 20 | 25 | 35 | 20 | 25 |
| HI-WAX 400 | | | | | | | |
| IRGANOX 1010 | 0.5 | 0.5 | 0.2 | 0.2 | 0.5 | 0.5 | 0.5 |
| Comonomer content (wt %) | 14 | 15 | 14 | 14 | 18 | 15 | 15 |
| Viscosity @177 °C (350 °F) (cps) | 479 | NT | 1026 | 719 | 1292 | 1581 | 1141 |
| Viscosity @ 149 °C (300 °F) (cps) | 1029 | 1464 | NT | NT | NT | NT | NT |
| MEC Set Speed (seconds) | 0.8 | 2.3* | 1.1 | 1.2 | 1.5 | 1.1 | 0.8 |
| Heat Stress Resistance °C (°F) | 65.6 | NT | 62.8 | 73.9 | 65.6 | NT | NT |
| | (150) | | (145) | (165) | (150) | | |
| Fiber Tear @ -29 °C(-20 °F)(%) | 58 | 69* | 86 | 6 | 58 | NT | 84 |
| Fiber Tear @ 17.8 °C(0 °F)(%) | 85 | 46* | 85 | 0 | 30 | NT | 71 |
| Fiber Tear @ 4.4 °C(40 °F)(%) | 41 | 22* | 99 | 43 | 59 | NT | 74 |
| Fiber Tear @ RT (%) | 91 | 51* | 100 | 100 | 60 | NT | 88 |
| Fiber Tear @ 54.4 °C(130 °F)(%) | 100 | 10* | 93 | 94 | 89 | NT | 83 |
| Fiber Tear @ 60 °C(140 °F)(%) | 96 | 36* | 92 | 90 | 82 | NT | 87 |

| | | | | | | | |
|---|---|---|---|---|---|---|---|
| *MEC Set Speed and Fiber Tear performed with an application temperature of 149°C. | | | | | | | |

**Table Four - Heat Stability Results when aged at 177 °C**

| | **Initial** | | **2-weeks aged** | | **3-weeks aged** | |
|---|---|---|---|---|---|---|
| | Viscosity | MGC | Viscosity | MGC | Viscosity | MGC |
| | (cps) | | (cps) | | (cps) | |
| Ex 13 | 479 | 1 | 507 | 8 | 527 | 12 |
| | | | (+ 5.8%) | | (+9.8%) | |
| Ex 18 | 1581 | 1 | 1725 | 6 | 1745 | 7 |
| | | | (+ 9.1%) | | (+10.4%) | |

Other embodiments are within the claims.

## Claims

1. A hot melt adhesive composition comprising:
a.) from 40 % to 85 % by weight of an ethylene copolymer derived from ethylene and a co-monomer selected from the group consisting of vinyl acetate, alkyl acrylate, alkyl methacrylate, and combinations thereof,
b.) no greater than 27 % by weight of a tackifying agent, and
c.) from 15 % to 35 % by weight of a synthetic wax;
wherein the ethylene copolymer has a melt index (190°C, 2.16 kgs) of at least 450 g/10 min and a comonomer content of no greater than 27 % by weight, said hot melt adhesive composition having a viscosity at 177°C of no greater than 2 Pas (2000 cps).

2. The hot melt adhesive composition of claim 1 wherein the ethylene copolymer is derived from ethylene and vinyl acetate, and/or
wherein the ethylene copolymer has a comonomer content of no greater than 20 % by weight, and/or
wherein the ethylene copolymer has a melt index (190°C, 2.16 kgs) of at least 1000 g/10 min.

3. The hot melt adhesive composition of claim 1 wherein the tackifying agent is a hydrogenated hydrocarbon resin with a melt point of at least 110°C, and/or wherein the tackifying agent is a hydrogenated hydrocarbon resin with an aromatic content of no greater than 15 % by weight.

4. The hot melt adhesive composition of claim 1 wherein the sum of a.), b.) and c.) comprises at least 90 % by weight of the composition.

5. The hot melt adhesive composition of claim 1 wherein the composition is free of a functionalized wax.

6. The hot melt adhesive composition of claim 1 wherein the composition further comprises a styrene block copolymer.

7. The hot melt adhesive composition of claim 1 wherein the composition has a viscosity at 149°C of no greater than 1.5 Pas (1500 cps), and/or
wherein the composition has a MEC set speed of no greater than 2 seconds and a heat stress resistance of no less than 51.7°C, and/or
wherein the composition has a viscosity change of no greater than 12 % after 2 weeks, when tested according to the Thermal Stability Test Method.

8. The hot melt adhesive composition of claim 7 wherein the composition has a viscosity at 149°C of no greater than 1.5 Pas (1500 cps).

9. A package comprising:
the hot melt adhesive composition of claim 1;
a first substrate comprising fibers; and
a second substrate comprising fibers, the second substrate bonded to the first substrate through the adhesive composition.

10. The package of claim 9 wherein the package is selected from a carton, case or tray.

11. The package of claim 9 wherein the hot melt adhesive composition is applied to the first or second substrate at an application temperature of less than 163°C.

## Patentansprüche

1. Schmelzkleber-Zusammensetzung, umfassend:
a.) von 40 Gew.-% bis 85 Gew.-% eines Ethylen-Copolymers, abgeleitet von Ethylen und einem Comonomer, ausgewählt aus der Gruppe, bestehend aus Vinylacetat, Alkylacrylat, Alkylmethacrylat und Kombinationen davon,
b.) nicht mehr als 27 Gew.-% eines klebrig machenden Mittels, und
c.) von 15 Gew.-% bis 35 Gew.-% eines synthetischen Wachses;
wobei das Ethylen-Copolymer einen Schmelzindex (190°C, 2.16 kg) von mindestens 450 g/10 min und einen Comonomergehalt von nicht mehr als 27 Gew.-% aufweist, und die Schmelzkleber-Zusammensetzung eine Viskosität bei 177°C von nicht mehr als 2 Pas (2000 cps) aufweist.

2. Schmelzkleber-Zusammensetzung gemäß Anspruch 1, wobei das Ethylen-Copolymer aus Ethylen und Vinylacetat abgeleitet ist, und/oder
wobei das Ethylen-Copolymer einen Comonomergehalt von nicht mehr als 20 Gew.-% aufweist, und/oder
wobei das Ethylen-Copolymer einen Schmelzindex (190°C, 2.16 kg) von mindestens 1000 g/10 min aufweist.

3. Schmelzkleber-Zusammensetzung gemäß Anspruch 1, wobei das klebrig machende Mittel ein hydriertes Kohlenwasserstoff-Harz mit einem Schmelzpunkt von mindestens 110°C ist, und/oder
wobei das klebrig machende Mittel ein hydriertes Kohlenwasserstoff-Harz mit einem Aromatengehalt von nicht mehr als 15 Gew.-% ist.

4. Schmelzkleber-Zusammensetzung gemäß Anspruch 1, wobei die Summe aus a.), b.) und c.) mindestens 90 Gew.-% des Zusammensetzung umfasst.

5. Schmelzkleber-Zusammensetzung gemäß Anspruch 1, wobei die Zusammensetzung kein funktionalisiertes Wachs enthält.

6. Schmelzkleber-Zusammensetzung gemäß Anspruch 1, wobei die Zusammensetzung ferner ein Styrolblockcopolymer umfasst.

7. Schmelzkleber-Zusammensetzung gemäß Anspruch 1, wobei die Zusammensetzung eine Viskosität bei 149°C von nicht mehr als 1.5 Pas (1500 cps) aufweist, und/oder
wobei die Zusammensetzung eine MEC-Härtungsgeschwindigkeit von nicht mehr als 2 Sekunden und eine Wärmestressbeständigkeit von nicht weniger als 51.7°C aufweist, und/oder
wobei die Zusammensetzung nach 2 Wochen eine Viskositätsänderung von nicht mehr als 12 % aufweist, wenn getestet nach der "Thermal Stability Test" Methode.

8. Schmelzkleber-Zusammensetzung gemäß Anspruch 7, wobei die Zusammensetzung eine Viskosität bei 149°C von nicht mehr als 1.5 Pas (1500 cps) aufweist.

9. Packung, umfassend:
die Schmelzkleber-Zusammensetzung nach Anspruch 1;
einen ersten Träger, umfassend Fasern; und
einen zweiten Träger, umfassend Fasern, wobei der zweite Träger an den ersten Träger mittels der Klebstoff-Zusammensetzung gebunden ist.

10. Packung gemäß Anspruch 9, wobei die Packung ausgewählt ist aus einem Karton, einem Kasten oder einer Schale.

11. Packung gemäß Anspruch 9, wobei die Schmelzkleber-Zusammensetzung auf den ersten oder zweiten Träger bei einer Anwendungstemperatur von weniger als 163°C aufgebracht wird.

## Revendications

1. Une composition adhésive thermofusible comprenant :
a.) de 40 % à 85 % en poids d'un copolymère d'éthylène dérivé de l'éthylène et d'un comonomère choisi dans le groupe constitué par l'acétate de vinyle, l'acrylate d'alkyle, le méthacrylate d'alkyle et les combinaisons de ceux-ci,
b.) pas plus de 27 % en poids d'un agent d'adhésivité, et
c.) de 15 % à 35 % en poids d'une cire synthétique ;
le copolymère d'éthylène a un indice de fusion (190°C, 2,16 kg) d'au moins 450 g/10 min et une teneur en comonomère non supérieure à 27 % en poids, ladite composition adhésive thermofusible ayant une viscosité à 177°C non supérieure à 2 Pas (2000 cps).

2. La composition adhésive thermofusible selon la revendication 1, dans laquelle le copolymère d'éthylène est dérivé d'éthylène et d'acétate de vinyle, et/ou dans laquelle le copolymère d'éthylène a une teneur en comonomère non supérieure à 20 % en poids, et/ou
dans laquelle le copolymère d'éthylène a un indice de fusion (190°C, 2,16 kg) d'au moins 1000 g/10 min.

3. La composition adhésive thermofusible selon la revendication 1, dans laquelle l'agent d'adhésivité est une résine hydrocarbonée hydrogénée ayant un point de fusion d'au moins 110°C, et/ou
dans laquelle l'agent d'adhésivité est une résine hydrocarbonée hydrogénée ayant une teneur en aromatiques non supérieure à 15 % en poids.

4. La composition adhésive thermofusible selon la revendication 1, dans laquelle la somme de a.), b.) et c.) constitue au moins 90 % en poids de la composition.

5. La composition adhésive thermofusible selon la revendication 1, dans laquelle la composition est exempte de cire fonctionnalisée.

6. La composition adhésive thermofusible selon la revendication 1, dans laquelle la composition comprend en outre un copolymère séquencé de styrène.

7. La composition adhésive thermofusible selon la revendication 1, dans laquelle la composition a une viscosité à 149°C non supérieure à 1,5 Pas (1500 cps), et/ou
dans laquelle la composition a une vitesse de prise MEC non supérieure à 2 secondes et une résistance à la contrainte thermique non inférieure à 51,7°C, et/ou
dans laquelle la composition présente une variation de viscosité non supérieure à 12 % après 2 semaines, lorsqu'elle est testée selon le *Thermal Stability Test Method.*

8. La composition adhésive thermofusible selon la revendication 7, dans laquelle la composition a une viscosité à 149°C non supérieure à 1,5 Pas (1500 cps).

9. Un emballage comprenant :
la composition adhésive thermofusible selon la revendication 1 ;
un premier substrat comprenant des fibres ; et
un deuxième substrat comprenant des fibres, le deuxième substrat étant lié au premier substrat par la composition adhésive.

10. L'emballage selon la revendication 9, dans lequel l'emballage est choisi parmi un carton, un étui ou un plateau.

11. L'emballage selon la revendication 9, dans lequel la composition adhésive thermofusible est appliquée sur le premier ou le deuxième substrat à une température d'application inférieure à 163°C.
